# EUROPEAN PATENT APPLICATION

(11) **EP 3 763 538 A1**
(43) Date of publication of application: **13.01.2021**
(21) Application number: 18908817.2
(22) Date of filing: 06.12.2018
(51) Int. Cl.: B41N 10/04, B32B 15/06, B32B 25/04, B32B 27/06

(54) **RUBBER BLANKET FOR PRINTING AND METHOD FOR PRODUCING SAME**

(30) Priority: 06.03.2018 JP 2018039998
(71) Applicant: Kinyosha Co., Ltd., Shinagawa-ku, Tokyo 141-0032 (JP)
(72) Inventor: TANAKA, Ryuta, Tokyo 141-0032 (JP); KAWAGUCHI, Masakuni, Tokyo 141-0032 (JP)
(74) Representative: Zech, Stefan Markus
(86) International application number: PCT/JP2018/044979
(87) International publication number: WO 2019/171690

(57) **Abstract**

This rubber blanket (1) for printing is provided with a base layer (2), a surface rubber layer (3) which is provided on one surface of the base layer (2), and a metal layer (4) which is provided on the other surface of the base layer (2), that other surface being on the reverse side of the surface rubber layer (3)-side surface. The metal layer (4) is provided with a passivation layer (9) in at least a surface that is on the reverse side of the base layer (2)-side surface.

## Description

### Technical Field

The present invention relates to a printing rubber blanket used for offset printing and manufacturing method thereof.

### Background Art

A rubber blanket used for offset printing is generally provided with a base layer including a plurality of base textiles and sponge rubber layer (compressible rubber layer) and surface rubber layer formed on the base layer. Such a rubber blanket is used by being wrapped around a blanket cylinder with the surface rubber layer being outside. Due to long-time use of the rubber blanket, the stress of the base textiles is loosened up whereby slackness of the base textiles is caused or the base textiles elongate to reduce the thickness. Accordingly, there has been a problem in that it becomes impossible to carry out stable printing.

As a method of maintaining the tension or thickness of the rubber blanket constant during the period of endurance, a method using a rubber blanket provided with metallic foil on a surface thereof coming into contact with a blanket cylinder (hereinafter referred to also as a "metal-backed blanket") is disclosed in Patent Literature 1. However, in this configuration, there is a problem in that the metallic foil or blanket cylinder is corroded by washing to be carried out during the printing process or after printing. The corrosion is attributable to the fact that the cleaning liquid enters a part between the metallic foil and blanket cylinder and a chemical substance contained in the cleaning liquid acts as an electrolyte to thereby cause the metallic foil and blanket cylinder constituted of metals different from each other in the ionization tendency to bring about a corrosion reaction. Moreover, in this configuration, there is a problem in that the metallic foil and blanket cylinder rub against each other to cause abrasion.

As a solution to such a problem, a metal-backed blanket provided with an insulator (for example, Mylar (registered trade mark)) or the like on the surface of the metallic foil on the blanket cylinder side in order that the metallic foil and blanket cylinder may not come into direct contact with each other is used. Further, in Patent Literature 2, a rubber blanket in which a polymer layer is formed on a surface of the metallic foil on the blanket cylinder side is disclosed. In Patent Literature 3, a rubber blanket provided with a plastic film on a surface of the metallic foil on the blanket cylinder side is disclosed. According to these methods, the metallic foil and blanket cylinder are prevented from coming into direct contact with each other.

### Citation List

### Patent Literatures

Patent Literature 1: JP H03-133695 A
Patent Literature 2: JP 4388476 B
Patent Literature 3: JP 2010-532723 A

### Summary of Invention

### Technical Problem

However, the metal-backed blanket provided with an insulator has a problem in that the adhesion layer is dissolved in the cleaning agent whereby the insulator exfoliates from the metallic foil. At the part of occurrence of the exfoliation, the thickness of the blanket changes, and hence a defect in printing occurs. Further, in the metal-backed blanket provided with a polymer layer on the surface thereof, there is a problem in that the adhesive strength between the metallic foil and polymer layer is insufficient, and hence the polymer layer exfoliates or separates from the metallic foil at the time of printing. Such an operation as to damage the polymer layer in handling the blanket, for example, rubbing the polymer layer with the surface of the working table particularly causes the exfoliation or separation. At the part of occurrence of the exfoliation or separation of the polymer layer, the metallic foil and blanket cylinder come into direct contact with each other, and hence corrosion is thereby caused. Furthermore, also in an example in which a plastic film is bonded to the metallic foil by thermal adhesion, there is a problem in that the plastic film exfoliates during use.

An embodiment described herein aims to provide a printing rubber blanket preventing corrosion and abrasion of the metallic foil and blanket cylinder from occurring and manufacturing method thereof.

### Solution to Problem

A printing rubber blanket according to an embodiment is provided with a base layer, surface rubber layer formed on one surface of the base layer, and metal layer formed on the other surface of the base layer on the opposite side of the surface rubber layer. The metal layer includes a passivation layer on at least a surface thereof on the opposite side of the base layer side.

### Advantageous Effects of Invention

According to the present invention, it is possible to provide a printing rubber blanket making it possible to prevent corrosion and abrasion of the metallic foil and blanket cylinder from occurring and enabling stable printing and manufacturing method thereof.

### Brief Description of Drawings

FIG. 1 is a schematic view showing a printing rubber blanket of an embodiment.
FIG. 2 is a schematic view showing a printing rubber blanket according to the embodiment.
FIG. 3 is a schematic view showing a printing rubber blanket according to the embodiment.
FIG. 4 is a flowchart showing a manufacturing method of the printing rubber blanket according to the embodiment.
FIG. 5 is a schematic view showing states where the printing rubber blanket according to the embodiment is attached to the blanket cylinder.

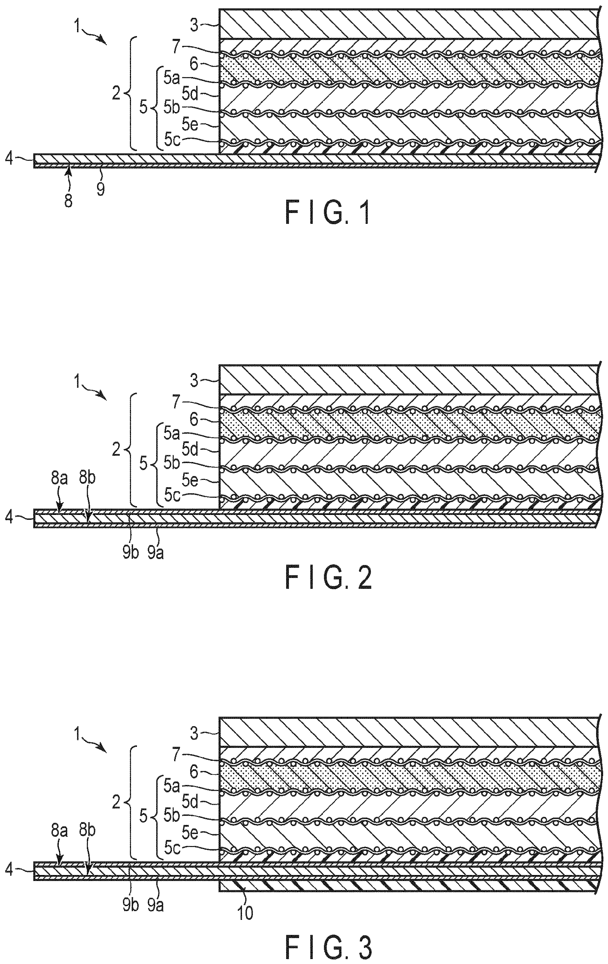

Mode for Carrying Out the Invention Hereinafter, an embodiment of the present invention will be described with reference to the accompanying drawings. The drawings are schematic views and the scales on which the drawings are prepared are not accurate. It should be noted that, in the following description, a surface on the upper side of each layer is described as a "top surface" and surface on the underside is described as an "undersurface" according to the arrangement of FIG. 1.

FIG. 1 is a schematic view showing a printing rubber blanket according to the embodiment. The printing rubber blanket 1 is provided with a base layer 2, surface rubber layer 3, and metal layer 4. The surface rubber layer 3 is provided on the top surface of the base layer 2. The metal layer 4 is provided on the undersurface of the base layer 2. The metal layer 4 is provided with a passivation layer 9 on the undersurface 8 thereof. Hereinafter, each configuration will be described in detail.

The base layer 2 is a layer configured to support thereon the surface rubber layer 3. The base layer 2 is provided with, for example, a base textile layer 5, compressible rubber layer 6, and reinforcing textile 7.

The base textile layer 5 is provided with, for example, three base textiles 5a, 5b, and 5c. The base textile 5a and base textile 5b are bonded to each other with a rubber layer 5d. The base textile 5b and base textile 5c are bonded to each other with a rubber layer 5e. Although in this example, the base textile layer 5 is provided with the three base textiles, the number of base textiles may be one or two, or four or more base textiles may also be used.

As the base textiles 5a, 5b, and 5c, a base textile generally used for a printing rubber blanket can be used. The base textile is constituted of, for example, woven cloth, nonwoven cloth or a combination of any of these or the like. The woven cloth and nonwoven cloth can be formed of fiber including, for example, cotton, wool, linen, silk, rayon, cupro, acetate, nylon, vinylon, polyester, polyvinyl chloride, acrylic, acrylate, polyimide, carbon fiber, aramid fiber, glass fiber or a combination of any of these or the like. Although the contexture of the base textile is not specifically limited, plain weave, twill weave, sateen weave, and the like are named as the contexture.

As the rubber layers 5d and 5e, a rubber material generally used for a printing rubber blanket can be used. Although the rubber material is not specifically limited, for example, acrylonitrile-butadiene rubber, chloroprene rubber, fluororubber, polyurethane rubber, ethylene-propylene rubber, butyl rubber or a combination of any of these or the like can be named as the rubber material.

The compressible rubber layer 6 is a layer having cushioning characteristics provided on the top surface of the base textile layer 5. As the compressible rubber layer 6, a compressible rubber layer generally used for a printing blanket can be used. Although the compressible rubber layer 6 is not specifically limited, sponge rubber constituted of, for example, acrylonitrile-butadiene rubber, chloroprene rubber, fluororubber, polyurethane rubber, ethylene-propylene rubber, butyl rubber or a combination of any of these or the like can be used as the compressible rubber 6. It is desirable that the thickness of the compressible rubber layer 6 be, for example, greater than or equal to 0.1 mm and less than or equal to 2.0 mm.

The reinforcing textile 7 is a textile provided on the top surface of the compressible rubber layer 6 and configured to reinforce the base layer 2. As the reinforcing textile 7, for example, any one of the abovementioned base textiles may be used.

The base layer 2 may include a layer constituted of a further material in addition to the abovementioned configuration. Such a layer is, for example, a reinforcing layer, further bonding layer, further compressible rubber layer, layer or the like constituted of a further textile.

It is desirable that the thickness of the whole base layer 2 be 500 to 3000 µm.

The surface rubber layer 3 is provided on the surface (top surface of the reinforcing textile 7 in the example of FIG. 1) of the base layer 2. As the material for the surface rubber layer 3, a material generally used for a printing blanket can be used. Although the material for the surface rubber layer 3 is not specifically limited, for example, nitrile rubber, natural rubber, styrene-butadiene rubber, chloroprene, butyl rubber, ethylene-propylene rubber, chlorosulfonated polyethylene, silicone rubber, fluororubber or a combination of any of these or the like is named as the material for the surface rubber layer 3. It is desirable that the thickness of the surface rubber layer 3 be, for example, 0.2 to 0.5 mm. For example, the surface rubber layer 3 may be bonded to the reinforcing textile 7 with any one of the abovementioned rubber materials or the like.

The base layer 2 and surface rubber layer 3 are not limited to the aforementioned configurations, and the base layer 2 and surface rubber layer 3 may have configurations of a base layer and surface rubber layer used in a general printing rubber blanket.

The metal layer 4 is a thin plate-like metal provided on the undersurface of the base layer 2. The metal layer is hereinafter referred to also as metallic foil. The material for the metal layer 4 is, for example, a metal capable of forming a passivation layer 9. As the material for the metal layer 4, iron, nickel, aluminum, chromium, titanium or the like or an alloy or the like containing any one of these can be used. The alloy is, for example, stainless steel. It is desirable that, particularly from the viewpoint of cost, and a high degree of strength, stainless steel, for example, steel special use stainless (SUS) be used.

It is desirable that the thickness of the metal layer 4 be, for example, 0.10 to 0.30 mm.

The metal layer 4 is provided with a passivation layer 9 on at least the undersurface 8 thereof. The passivation layer 9 is constituted of, for example, an oxide of a metal contained in the material for the metal layer 4. The passivation layer 9 has, for example, the composition identical to the oxide film of the material for the metal layer 4. For example, when the metal layer 4 is constituted of SUS, the passivation layer 9 is constituted of an oxide of chromium having hydrated chromium oxyhydroxide (CrOₓ(OH)₂₋ₓ·H₂O) or the like as the main component.

The thickness of the passivation layer 9 is thicker than the passive oxide film naturally formed on the metal layer 4. The thickness of the passivation layer 9 is, for example, 5 nm to 2 µm. It is more desirable that the thickness be 10 to 100 nm.

When the thickness of the passivation layer 9 is greater than or equal to 5 nm, the metal layer 4 and blanket cylinder can be prevented from causing a corrosion reaction. Further, in view of cost in the manufacture, it is desirable that the thickness of the passivation layer 9 be less than or equal to 2 µm.

The metal layer 4 may further be provided with a passivation layer on the top surface thereof. Such an example is shown in FIG. 2. In this example, the metal layer 4 is provided with a first passivation layer 9a and second passivation layer 9b on the undersurface 8a and top surface 8b thereof. The metal layer 4 is provided with the second passivation layer 9b on the top surface 8b thereof, whereby the adhesive strength between the metal layer 4 and base layer 2 is enhanced. Thereby, it is possible to prevent the metal layer 4 from exfoliating from the base layer 2 while the printing rubber blanket 1 is used. Furthermore, a passivation layer 9 may be provided on the side face of the metal layer 4.

The top surface of the metal layer 4 is bonded to the undersurface of the base layer 2 with an adhesive. As the adhesive, for example, a thermosetting adhesive, thermoplastic adhesive or the like can be used. The metal layer 4 may be configured longer than the base layer 2 and surface rubber layer 3 and end of the printing rubber blanket 1 may be constituted of only the metal layer 4. The end of the printing rubber blanket 1 constituted of only the metal layer 4 may be, for example, the fitting section to be fixed to the blanket cylinder when the printing rubber blanket 1 is attached to the blanket cylinder.

The printing rubber blanket 1 has a desired size according to the use application. Although it is desirable that for example, the width be 100 to 1200 mm, length be 100 to 1200 mm, and thickness be 0.8 to 4.0 mm or the like, the dimensions are not limited to these.

The printing rubber blanket according to the embodiment described above includes the passivation layer 9 on the undersurface of the metal layer 4. The passivation layer 9 is thicker than a passive oxide film naturally formed on the metal layer 4. Such a passivation layer 9 is never ruined under the condition of coexistence of the chemical substance contained in the cleaning agent and acting as an electrolyte, metal layer 4, and blanket cylinder with each other. Accordingly, it is possible to prevent the metal layer 4 and blanket cylinder from causing a corrosion reaction. As a result, it is possible to prevent corrosion (for example, rusting) from occurring and carry out printing during the period of endurance of the printing rubber blanket. Further, the passivation layer 9 never exfoliates, and hence it is possible to maintain the thickness of the blanket constant during the period of endurance. Moreover, by virtue of the existence of the passivation layer 9, it is possible to prevent abrasion of the metal layer 4 from occurring. Therefore, according to the printing blanket according to the embodiment, it is possible to stably carry out excellent printing.

A further embodiment will be described below by using FIG. 3. The printing rubber blanket 1 of this example is provided with a polymer layer 10 on the undersurface of the passivation layer 9 of the metal layer 4.

It is desirable that the material for the polymer layer 10 be, for example, an acrylic resin, epoxy resin, fluororesin or a combination of any of these or the like. Alternatively, as the polymer layer 10, a melamine resin, phenolic resin or the like may be used. Alternatively, the material for the polymer layer 10 may be a polyamide, polyester, polypropylene, polyethylene, polyurethane, polyolefin, phenolic compound, nylon polyvinyl fluoride, copolymer including polyvinyl chloride or polyvinyl acetate, or ethylene-acrylic acid, ethylene-methacrylic acid copolymer or the like. The material for the polymer layer 10 may further be ionomer, acid denaturation polymer, anhydride denaturation polymer or the like.

It is desirable that the thickness of the polymer layer 10 be 5 to 250 µm. It is more desirable that the thickness of the polymer layer 10 be 5 to 20 µm. The polymer layer 10 has such a desirable thickness, whereby it is possible for the printing rubber blanket 1 to have an appropriate thickness as a whole, and it is possible for the polymer layer 10 to have sufficient durability. Further, in view of manufacturing cost, and risk in case of most unlikely falling off, the thickness of the polymer layer 10 is desirably about 5 to 20 µm.

The passivation layer 9 is provided on the undersurface 8 of the metal layer 4, whereby the adhesion strength between the polymer layer 10 and metal layer 4 is enhanced. Accordingly, the polymer layer 10 is prevented from exfoliating from the metal layer 4. Further, by providing the polymer layer 10, the metal layer 4 is protected, and corrosion (rusting) and abrasion of the metal layer 4 and blanket cylinder can further be prevented from occurring.

Next, the manufacturing method of the printing rubber blanket 1 will be described below.

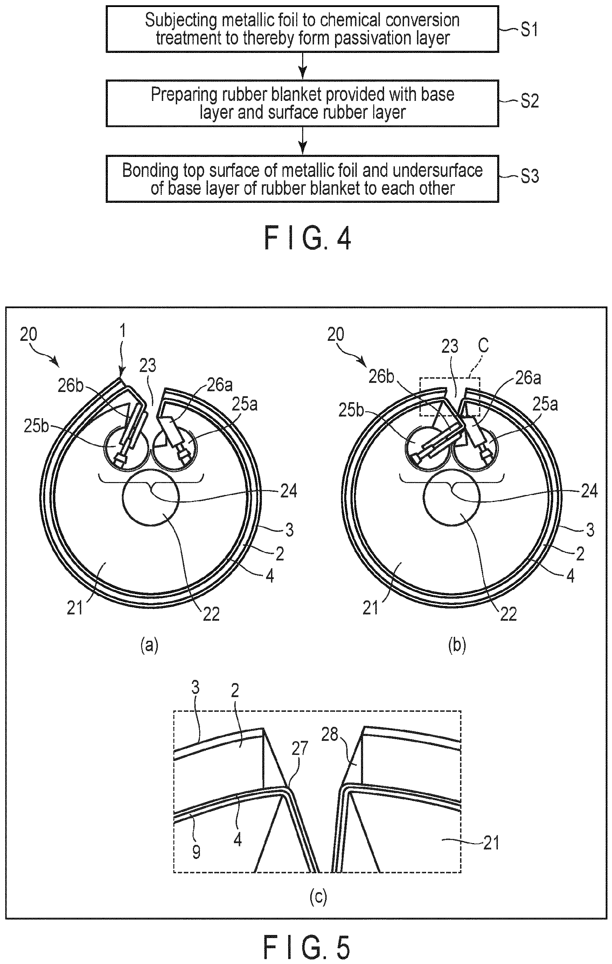

FIG. 4 is a schematic flowchart showing an example of the manufacturing method of the printing rubber blanket according to the embodiment. The manufacturing method of the printing rubber blanket 1 includes the following steps (S1) to (S3). Step of subjecting at least one surface of the metallic foil to chemical conversion treatment to thereby form a passivation layer (S1). Step of preparing a rubber blanket piece provided with a base layer and surface rubber layer (S2). Step of bonding a surface of the metallic foil on the opposite side of the passivation layer and surface of the rubber blanket piece on the base layer side to each other (S3).

Hereinafter, the steps will be described in detail.

In step (S1), a passivation layer is formed on the metallic foil. As the metallic foil, any one of the aforementioned metal layers or types of metallic foil can be used. The passivation layer is formed by subjecting one surface of the metallic foil to chemical conversion treatment. The chemical conversion treatment is, for example, passivation treatment, chromate conversion treatment, phosphatizing treatment, gunblue treatment, other chemical conversion treatment or the like. For example, when the metal layer is constituted of SUS, it is desirable that formation of the passivation layer be carried out by passivation treatment, chromate conversion treatment or zirconium-based chemical conversion treatment.

The abovementioned chemical conversion treatment can be carried out by, for example, a general method used in the chemical conversion treatment of a metal. The chemical conversion treatment can be carried out by, for example, immersing the surface of the metallic foil to be subjected to the chemical conversion treatment in a solution containing a chemical agent to be used for the chemical conversion treatment (hereinafter referred to as the chemical conversion treatment agent) or subjecting the surface of the metallic foil to electrolysis in a solution containing the chemical conversion treatment agent or applying the chemical conversion treatment agent to a desired surface of the metallic foil, or the like. For example, when the metal layer is constituted of SUS, the passivation layer can be formed by immersing the desired surface of the SUS plate in a potassium dichromate solution, sodium sulfate solution, concentrated nitric acid or the like or applying the abovementioned solution to the desired surface of the metallic foil and drying the applied solution.

The thickness of the passivation layer is formed thicker than a passive oxide film naturally formed on the metal layer. For example, it is desirable that the passivation layer be formed in such a manner as to have a thickness of 5 nm to 2 µm. It is more desirable that the thickness be 10 to 100 nm. It is possible to form the passivation layer in such a manner as to have a desired thickness by, for example, adjusting the period of time during which the metallic foil is made in contact with the chemical conversion treatment agent. The thickness of the passivation layer can be measured by, for example, an ellipsometer or the like.

The passivation layer may be formed only on the undersurface of the metallic foil or a second passivation layer may further be formed on the top surface thereof. Furthermore, a passivation layer may be formed on the side face of the metallic foil.

When a polymer layer is formed on the surface of the metallic foil on which the passivation layer is formed, it is sufficient if, after the passivation layer is formed on the metallic foil, a polymer layer is formed on the undersurface of the metallic foil by any known polymer coating method. As the polymer coating method, for example, blade coating, spray coat, dipping, electrostatic coating method, roll coat method or the like can be used.

In step (S2), a rubber blanket piece provided with the base layer and surface rubber layer is prepared. Here, the surface rubber layer is provided on the base layer. As the rubber blanket piece, any one of the abovementioned base layers and surface rubber layers can be used. Regarding step (S1) and step (S2), any one of them may be carried out first.

In step (S3), the surface of the metal layer on the opposite side of the passivation layer and surface of the blanket piece on the base layer side are bonded to each other. Bonding is carried out by using, for example, a thermosetting adhesive, thermoplastic adhesive or the like.

BY carrying out the abovementioned steps, the printing rubber blanket according to the embodiment can be manufactured. The example of the manufacturing method of the printing rubber blanket is constituted only of steps (S1) to (S3) described above.

The printing rubber blanket according to the embodiment is used by being attached to the blanket cylinder. Hereinafter, an example of the method of using the printing rubber blanket will be described. FIG. 5 is a cross-sectional view showing an example of a blanket cylinder 20 in a state where the blanket cylinder 20 is mounted with the printing rubber blanket 1. Part (a) of FIG. 5 and part (b) of FIG. 5 are cross-sectional views obtained by cutting the blanket cylinder 20 perpendicularly to the longitudinal direction thereof. Part (a) of FIG. 5 shows a state where the printing rubber blanket 1 is being attached to the blanket cylinder 20. Part (b) of FIG. 5 shows a state where the printing rubber blanket 1 is fixed to the blanket cylinder 20 by way of the state of part (a) of FIG. 5. Part (c) of FIG. 5 is an enlarged view obtained by enlarging the part of part (b) of FIG. 5 surrounded by a dotted line C.

The blanket cylinder 20 is provided with a columnar cylinder main body 21 and shaft section 22 serving as a shaft configured to rotate the cylinder main body 21. A gap 23 is formed in a surface of the cylinder main body 21. The gap 23 is opened from the surface of the cylinder main body 21 to the inside of the cylinder main body 21. A blanket fixing mechanism 24 is arranged inside the cylinder main body 21. The blanket fixing mechanism 24 is provided with two fixing shafts (first fixing shaft 25a and second fixing shaft 25b). The first fixing shaft 25a is provided with a first gripper section 26a configured to fix one end (gripper side edge) of the printing rubber blanket 1. The second fixing shaft 25b is provided with a second gripper section 26b configured to fix the other end (gripper end side edge) of the printing rubber blanket 1.

Fixing of the printing rubber blanket 1 to the cylinder main body 21 is carried out in the following manner. First, the metal layer 4 serving as the gripper side edge of the printing rubber blanket 1 is inserted into the gap 23 with the surface thereof having the surface rubber layer 3 facing upward to thereby be set to the first gripper section 26a. Thereafter, the metal layer 4 serving as the gripper end side edge of the printing rubber blanket 1 is inserted into the gap 23 by way of the circumferential surface of the cylinder main body 21 to thereby be set to the second gripper section 26b (part (a) of FIG. 5).

Next, by rotating the second fixing shaft 25b, the leading end of the second gripper section 26b is pressed against the side face of the first gripper section 26a (part (b) of FIG. 5). Thereby, the printing rubber blanket 1 is fixed to the cylinder main body 21.

As shown in part (c) of FIG. 5, a seal section 28 may be provided in such a manner as to couple the ends of the base layer 2 and surface rubber layer 3 to the bent section 27 of the metal layer 4. By virtue of the seal section 28, the base layer 2 and surface rubber layer 3 are prevented from peeling off the metal layer 4 while the printing rubber blanket 1 is used.

The method of using the printing rubber blanket 1 is not limited to the method described above. For example, the printing rubber blanket 1 can be used by being attached to any blanket cylinder generally used for offset printing.

### [Example]

Examples of investigating presence/absence of exfoliation of the blanket according to the embodiment, presence/absence of corrosion of the metallic foil, presence/absence of corrosion of the blanket cylinder, and printability (suitability for printing) are shown below.

### • Preparation of Printing Rubber Blanket

A rubber blanket piece configured in such a manner that a base layer including four base textiles, compressible rubber layer, reinforcing textile, and surface rubber layer (thickness 0.5 mm) are bonded to each other in the order mentioned was prepared. The abovementioned rubber blanket piece was used to produce nine types of printing rubber blankets of the following examples 1 to 3 and comparative examples 1 to 6.

### (Example 1: Passivation layer only)

A passivation layer of a thickness of 5 nm was formed on one surface of the metallic foil of SUS having a thickness of 200 µm by subjecting the surface to passivation treatment. The thickness of the passivation layer was measured by using a visible spectrophotometric ellipsometer Smart SE (made by HORIBA, Ltd.). A printing rubber blanket was produced by bonding the surface of the metallic foil on the opposite side of the passivation layer to the surface of the rubber blanket piece on the base layer side.

### (Example 2: Passivation layer + Epoxy Resin)

The passivation layer surface of the metallic foil of the printing rubber blanket identical to the example 1 was coated with an epoxy resin of a thickness of 10 µm.

### (Example 3: Passivation layer + Acrylic Resin)

The passivation layer surface of the metallic foil of the printing rubber blanket identical to the example 1 was coated with an acrylic resin of a thickness of 10 µm.

### (Comparative Example 1: No Passivation layer + Polyester Film)

One surface of a polyester film having a thickness of 0.125 mm was coated with an adhesive with a thickness of 0.035 mm. This polyester film was stuck to one surface of SUS metallic foil of a thickness of 1.75 mm which has not been subjected to chemical conversion treatment by thermal adhesion. The other surface of the metallic foil on the opposite side of the film side was bonded to the surface of the rubber blanket piece on the base layer side.

### (Comparative Example 2: No passivation layer + Polyimide Film)

One surface of a polyimide film having a thickness of 0.125 mm was coated with an adhesive with a thickness of 0.035 mm. This polyimide film was stuck to one surface of SUS metallic foil of a thickness of 1.75 mm which has not been subjected to chemical conversion treatment by thermal adhesion. The other surface of the metallic foil on the opposite side of the film side was bonded to the surface of the rubber blanket piece on the base layer side.

### (Comparative Example 3: No Passivation layer + Polyamide Film)

One surface of a polyamide film having a thickness of 0.125 mm was coated with an adhesive with a thickness of 0.035 mm. This polyamide film was stuck to one surface of SUS metallic foil of a thickness of 1.75 mm which has not been subjected to chemical conversion treatment by thermal adhesion. The other surface of the metallic foil on the opposite side of the film side was bonded to the surface of the rubber blanket piece on the base layer side.

### (Comparative Example 4: No Passivation layer)

One surface of SUS metallic foil of a thickness of 1.75 mm which has not been subjected to chemical conversion treatment was bonded to the surface of the rubber blanket piece on the base layer side.

### (Comparative Example 5: No Passivation layer + Epoxy Resin)

One surface of SUS metallic foil of a thickness of 1.75 mm which has not been subjected to chemical conversion treatment was coated with an epoxy resin with a thickness of 10 µm. The surface of the metallic foil on the opposite side of the resin side was bonded to the surface of the rubber blanket piece on the base layer side.

### (Comparative Example 6: No Passivation layer + Acrylic Resin)

One surface of SUS metallic foil of a thickness of 1.75 mm which has not been subjected to chemical conversion treatment was coated with an acrylic resin with a thickness of 10 µm. The surface of the metallic foil on the opposite side of the resin side was bonded to the surface of the rubber blanket piece on the base layer side.

### • Evaluation of Presence/Absence of Exfoliation, Presence/Absence of Corrosion of Metallic Foil, and Presence/Absence of Corrosion of Blanket Cylinder

Each of the blankets of the examples 1 to 3 and comparative examples 1 to 6 described above was attached to a blanket cylinder and was rotated 10,000,000 times at a rotational speed of 1,000 rpm under printing pressure of 0.2 mm. A cleaning liquid was made to flow along the surface of the blanket and between the blanket and blanket cylinder at a frequency of once per 500,000 revolutions, whereby the state of cleaning and residence of the cleaning liquid in the normal use was reproduced.

Thereafter, evaluations were carried out with respect to presence/absence of exfoliation, presence/absence of corrosion of the metallic foil, and presence/absence of corrosion of the blanket cylinder.

### • Evaluation of Printability (Suitability for Printing) of Printing Rubber Blankets

Each of the blankets of the examples 1 to 3 and comparative examples 1 to 6 was used to carry out printing by using the actual machine and the printability was evaluated. Regarding the conditions of printing by the actual machine, the push-in amount was 0.2 mm, speed was 60,000 copies/h, and number of printed copies was 5,000. When deterioration in printing quality such as omission, blurring or the like was found in printing, the printability was judged to be "bad" and, when no deterioration in printing quality was found, the printability was judged to be "good".

The results of the evaluations of all the examples and comparative examples are summarized in Tables 1 and 2 .

**Table 1**

| | Configuration of metal layer | Exfoliation | Metallic foil corrosion | Blanket cylinder corrosion | Printability |
|---|---|---|---|---|---|
| Example 1 | Passivation layer | - | None | None | Good |
| Example 2 | Passivation layer + epoxy resin | None | None | None | Good |
| Example 3 | Passivation layer + acrylic resin | None | None | None | Good |

**Table 2**

| | Configuration of metal layer | Exfoliation | Metallic foil corrosion | Blanket cylinder corrosion | Printability |
|---|---|---|---|---|---|
| Comparative example 1 | Polyester film | Found | None | None | Bad |
| Comparative example 2 | Polyimide film | Found | None | None | Bad |
| Comparative example 3 | Polyamide film | Found | None | None | Bad |
| Comparative example 4 | No working | - | Found | Found | Good |
| Comparative example 5 | Epoxy resin | Found | Found | Found | Good |
| Comparative example 6 | Acrylic resin | Found | Found | Found | Good |

In the examples 1 to 3, exfoliation of resin and corrosion did not occur. Further, the printability was good in the examples 1 to 3. On the other hand, in the comparative examples 1 to 3, although corrosion did not occur in the metallic foil, exfoliation occurred in the film. Therefore, the printability was judged to be bad. In the comparative example 4, although the printability was good, corrosion occurred in the metallic foil. In the comparative examples 5 and 6, although the printability was good, exfoliation of the resin occurred and corrosion occurred in the metallic foil.

From the results described above, according to the printing rubber blanket according to the embodiment, it has become clear that it is possible to prevent corrosion and abrasion of the metallic foil and blanket cylinder from occurring.

### Reference Signs List

- 1 ···: printing rubber blanket
- 2 ···: base layer
- 3 ···: surface rubber layer
- 4 ···: metal layer
- 8 ···: undersurface
- 9 ···: passivation layer
- 10 ···: polymer layer

## Claims

1. A printing rubber blanket comprising:
a base layer;
a surface rubber layer provided on one surface of the base layer; and
a metal layer provided on the other surface of the base layer on the opposite side of the surface rubber layer, wherein
the metal layer includes a passivation layer on at least a surface thereof on the opposite side of the base layer.

2. The blanket of claim 1, wherein
a thickness of the passivation layer is 5 nm to 2 µm.

3. The blanket of claim 1 or 2, wherein
the metal layer is constituted of stainless steel.

4. The blanket of any one of claims 1 to 3, wherein
the metal layer further includes a polymer layer on a surface of the passivation layer.

5. The blanket of any one of claims 1 to 4, wherein
the metal layer further includes a second passivation layer on a surface thereof on the base layer side.

6. A manufacturing method of a printing rubber blanket comprising:
a step of subjecting at least one surface of metallic foil to chemical conversion treatment to thereby form a passivation layer;
a step of preparing a rubber blanket piece including a base layer and a surface rubber layer; and
a step of bonding a surface of the metallic foil on the opposite side of the passivation layer and a surface of the rubber blanket piece on the base layer side to each other.

7. The method of claim 6, wherein
a thickness of the passivation layer is 5 nm to 2 µm.

8. The method of claim 6 or 7, wherein
the metallic foil is constituted of stainless steel.

9. The method of any one of claims 6 to 8, further comprising a step of forming a polymer layer on a surface of the passivation layer of the metallic foil.

10. The method of any one of claims 6 to 9, further comprising a step of forming a second passivation layer on a surface of the metallic foil to be bonded to the base layer.
